# EUROPÄISCHE PATENTSCHRIFT

(11) **EP 2 831 433 B1**
(45) Veröffentlichungstag und Bekanntmachung des Hinweises auf die Patenterteilung: **02.12.2015**
(21) Anmeldenummer: 13732374.7
(22) Anmeldetag: 29.05.2013
(51) Int. Cl.: F16B 35/04, F16B 39/28

(54) **FORMSCHLUSSVERBINDUNG SOWIE VERBRENNUNGSMOTOR**
FORM-FITTING CONNECTION AND INTERNAL COMBUSTION ENGINE
ASSEMBLAGE PAR COMPLÉMENTARITÉ DE FORME ET MOTEUR À COMBUSTION INTERNE

(30) Priorität: 26.07.2012 DE 102012106793
(43) Veröffentlichungstag der Anmeldung: 04.02.2015
(73) Patentinhaber: Flaig, Hartmut, 78554 Aldingen (DE)
(72) Erfinder: Flaig, Hartmut, 78554 Aldingen (DE)
(74) Vertreter: Wagner, Kilian
(86) Internationale Anmeldenummer: PCT/EP2013/061120
(87) Internationale Veröffentlichungsnummer: WO 2014/016020

(56) Entgegenhaltungen:
- GB-A- 203 508
- US-A- 4 538 947

## Beschreibung

Die Erfindung betrifft eine Formschlussverbindung, umfassend ein Außengewindeelement, insbesondere einen (kopflosen) Außengewindestift gemäß Anspruch 1 sowie einen Verbrennungsmotor gemäß Anspruch 11.

Es ist üblich, den Zylinderkopf von Verbrennungsmotoren über Außengewindestifte am Motorblock zu fixieren, wobei die Außengewindestifte mit korrespondierenden Innengewinden von Innengewindeöffnungen im Motorblock verschraubt sind. Die Außengewindestifte durchsetzen dabei jeweils eine korrespondierende Öffnung im Zylinderblock sowie eine mit dieser Öffnung fluchtende Öffnung in einem Krümmerblech, wobei der Verbund aus Motorblock, Zylinderkopf und Krümmerblech mit Hilfe von Muttern fixiert wird, die mit jeweils einem der Außengewindestifte verschraubt sind und sich axial auf den Krümmerblech abstützen. Muss das Krümmerblech nach einiger Betriebszeit ausgetauscht werden oder der Zylinderkopf vom Motorblock gelöst werden, besteht in der Praxis oftmals das Problem, dass der Außengewindestift beim Lösen der Fixiermutter aus dem Motorblock herausgelöst wird. Zudem kann es zu einem selbsttätigen Lösen des Außengewindeelementes durch die im Betrieb des Verbrennungsmotors auftretenden Schwingungen kommen.

Die US 4,538,947 A und die GB 203 508 A zeigen Außengewindeelemente mit stirnseitiger Zackengeometrie zum Abfräsen von Aufnahmeelementmaterial. Mit den bekannten Außengewindeelementen kann keine Formschluss-Verbindung hergestellt werden, die gegen unbeabsichtigtes Lösen gesichert ist.

Ausgehend von dem vorgenannten Stand der Technik liegt der Erfindung die Aufgabe zugrunde eine verbesserte Formschlussverbindung, insbesondere zur Anwendung in einem Motorblock anzugeben, mit welcher eine gegen Lösen gesicherte Verbindung mit einem Aufnahmeelement, insbesondere einem Motorblock herstellbar bzw. sichergestellt ist. Ferner besteht die Aufgabe darin, einen entsprechend verbesserten Verbrennungsmotor anzugeben.

Diese Aufgabe wird hinsichtlich der Formschlussverbindung mit den Merkmalen des Anspruchs 1 und hinsichtlich des Verbrennungsmotors mit den Merkmalen des Anspruchs 11 gelöst. Vorteilhafte Weiterbildungen der Erfindung sind in den Unteransprüchen angegeben.

Die Erfindung führt auch eine Formschlussverbindung, umfassend ein bevorzugt wie im Folgenden beschrieben ausgebildetes Außengewindeelement und ein Aufnahmeelement, insbesondere einen Motorblock oder ein Getriebegehäuse, wobei das Außengewinde des Außengewindeelements mit einem Innengewinde einer Innengewindeöffnung des Aufnahmeelementes verschraubt ist und in die mindestens eine Vertiefung des Aufnahmeelementes (mittels des zugeordneten Umformabschnittes) Aufnahmeelementmaterial hineinverformt ist, welches materialschlüssig mit dem restlichen, d.h. nicht verformten Aufnahmeelementmaterial verbunden ist.

Bevorzugt ist das gesamte Außengewindeelement aus einem härteren Material ausgebildet als das mit diesem verwendete Aufnahmeelement. So bestehen das Außengewindeelement bevorzugt aus einem Stahl und das Aufnahmeelement aus einer Aluminiumlegierung. Grundsätzlich ist es ausreichend, wenn der zumindest eine Umformabschnitt des Außengewindeelementes, beispielsweise durch nachträgliches Härten nach einem Formschritt härter ist als das zu deformierende Material des Aufnahmeelementes.

Wie erwähnt umfasst die Formschlussverbindung bevorzugt einen Motorblock, an dem beispielsweise mittels des Außengewindeelementes ein Zylinderkopf und/oder ein Krümmerblech festgelegt ist/sind. Alternativ kann die Formschlussverbindung beispielsweise ein Getriebegehäuse als Aufnahmeelement für das Außengewindeelement umfassen, wobei mittels des Außengewindeelementes an dem Getriebegehäuse beispielsweise ein Getriebegehäusedeckel festgelegt ist.

Der Erfindung liegt der Gedanke zugrunde, das Außengewindeelement der Formschlussverbindung im Bereich seines vorderen, in der Einbringrichtung gelegenen Endes, insbesondere stirnseitig, mit Verankerungsmitteln zu versehen, die derart ausgebildet sind, dass mit diesen durch Verdrehen des Außengewindeelementes in der Festziehumfangsrichtung und des damit verbundenen Vorschubs Material des Aufnahmebauteils plastisch in mindestens eine dafür vorgesehene, insbesondere stirnseitige Vertiefung des Außengewindeelementes hineinverformt wird, um somit eine formschlüssige Verbindung zwischen Außengewindeelement und Aufnahmeelement zu schaffen und um dadurch ein zum Lösen des Außengewindeelementes benötigtes Lösedrehmoment zu erhöhen. Anders ausgedrückt wird durch am Außengewindeelement vorgesehene Verankerungsmittel eine das Lösedrehmoment erhöhende, in Umfangsrichtung wirksame Formschlussverbindung (axiales Ineinandergreifen) zwischen dem Außengewindeelement und einem das Außengewindeelement aufnehmenden Aufnahmeelement geschaffen, wobei die hierzu am Außengewindeelement, bevorzugt stirnseitig vorgesehenen Verankerungsmittel einen sich in axialer Richtung erstreckenden Umformabschnitt umfassen, der so beschaffen ist, dass mit diesem aufgrund der kombinierten Bewegung des Außengewindeelementes beim Festziehen in der Festziehumfangsrichtung als auch in axialer Richtung Material des Aufnahmeelementes in der Festziehumfangsrichtung verdrängt wird und zwar in eine zum Umformabschnitt in der Festziehumfangsrichtung benachbarte axiale Vertiefung hinein, so dass eine Verdrehbewegung des Außengewindeelementes entgegen der Festziehumfangsrichtung, d.h. in eine Löseumfangsrichtung erschwert wird. Wesentlich ist, dass der Umformabschnitt das Aufnahmeelementmaterial vom restlichen Aufnahmeelement nicht abtrennt, sondern dass eine feste, materialschlüssige Verbindung zwischen dem in die mindestens eine Vertiefung hineinverdrängten Material und dem restlichen Aufnahmeelement, insbesondere dem Motorblock bestehen bleibt, um das notwendige Lösedrehmoment somit sicher zu erhöhen.

Bevorzugt wird die entgegen der Festziehumfangsrichtung von dem Umformabschnitt begrenzte Vertiefung in der Festziehumfangsrichtung von einem weiteren Umformabschnitt begrenzt bzw. von dessen Wand, an den noch weiter bevorzugt wiederum in der Festziehumfangsrichtung eine (eigene) Vertiefung zugeordnet ist, die wiederum weiter bevorzugt von einem weiteren, d.h. einem dritten Umformabschnitt oder wieder von dem erstgenannten Umformabschnitt begrenzt ist. Die Anzahl der Umformabschnitte kann variieren und ist insbesondere abhängig vom Außenumfang des Außengewindeelementes. Es ist nicht zwingend notwendig, dass die einem Umformabschnitt zugeordnete, von dem Umformabschnitt entgegen der Festziehumfangsrichtung begrenzte Vertiefung in der Festziehumfangsrichtung von einem Umformabschnitt begrenzt ist (was jedoch bevorzugt ist) - möglich ist auch, dass die Vertiefung in der Festziehumfangsrichtung von einem Axialfortsatz begrenzt ist, der beispielsweise Material des Aufnahmeelementes nicht umformt, sondern vom Aufnahmeelement z.B. spanend abhebt.

Bevorzugt ist das Außengewindeelement als kopfloser Außengewindestift, d.h. als Außengewindebolzen ausgebildet, wobei bevorzugt die größte Radialerstreckung das Außengewinde aufweist. Alternativ ist auch eine Ausführung des Außengewindeelementes als Kopfschraube mit einem das Außengewinde radial außen überragenden Schraubenkopf möglich.

In einer bevorzugten Ausführungsform umfasst das Außengewindeelement einen, bevorzugt stirnseitigen Antrieb zum Einbringen eines Drehmomentes in der Festziehumfangsrichtung. Es ist jedoch auch eine Ausführungsform ohne Antrieb möglich. In diesem Fall muss das Außengewindeelement beispielsweise klemmend fixiert werden, um ein Drehmoment in der Festziehumfangsrichtung einzubringen.

Weiterbildungsgemäß ist ein Wandabschnitt einer die Vertiefung auf der dem Umformabschnitt in der Festziehumfangsrichtung gegenüberliegenden Umfangsseite begrenzenden Wand so ausgebildet, dass beim Lösen des Aufnahmeelementes, d.h. beim Verdrehen des Aufnahmeelementes entgegen der Festziehumfangsrichtung ein durch Wechselwirkung zwischen dem deformierten Material des Aufnahmeelementes und dem Wandabschnitt resultierender Widerstand überwunden werden muss. Dabei ist es bevorzugt, wenn der vorgenannte Wandabschnitt sich über den größten Teil der Gesamterstreckung vorgenannter Wand erstreckt. Bevorzugt begrenzt vorgenannter Wandabschnitt gleichzeitig einen zu dem der Vertiefung zugeordneten Umformabschnitt in der Festziehumfangsrichtung benachbarten Umformabschnitt oder sonstigen Axialfortsatz.

Um diesen Widerstand zu erzeugen gibt es unterschiedliche Möglichkeiten, wobei eine Ausführungsform besonders bevorzugt ist, bei dem vorgenannter Wandabschnitt entgegen der Festziehrichtung in Richtung des hinteren Endes des Aufnahmeelements, d.h. entgegen der axialen Einbringungsrichtung ansteigt und gleichzeitig diese Steigung (Steigungswinkel) größer ist als die Steigung (Steigungswinkel) des Außengewindes des Außengewindeelementes, mit dem das Außengewindeelement mit dem Innengewinde des Aufnahmeelementes verschraubt ist. Zusätzlich oder alternativ ist es denkbar, dass ein Wandabschnitt der vorgenannten Wand parallel zur Axialerstreckung, d.h. Längserstreckung des Außengewindeelementes verläuft. Weiterhin ist es auch möglich, dass zusätzlich oder alternativ ein Wandabschnitt der vorgenannten Wand in der Festziehumfangsrichtung in Richtung des hinteren Endes des Außengewindeelementes ansteigt, wodurch der größte Widerstand gegen ein Lösen des Außengewindeelementes erreicht werden kann. Im Hinblick auf eine möglichst einfache und kostengünstige Fertigbarkeit des Außengewindeelementes im bevorzugten Kaltfließpressverfahren ist es von Vorteil, wenn die erste und/oder die zweite Alternative gewählt wird, d.h. dass der Wandabschnitt entweder parallel zur Axialerstreckung des Außengewindeelementes verläuft oder, was am bevorzugtesten ist, zwar entgegen der Festziehumfangsrichtung in Richtung des hinteren Endes des Außengewindeelementes ansteigt, jedoch mit einer größeren Steigung als die Steigung des Außengewindes.

Als besonders vorteilhaft hat es sich erwiesen, um ein Ablösen von Aufnahmeelementmaterial von dem Aufnahmeelement zu vermeiden, wenn ein an eine axial vordere Kante des Umformabschnitts angrenzender, die Vertiefung begrenzender Wandabschnitt des Umformabschnittes entweder parallel zur Axialerstreckung des Außengewindeelements verläuft und damit senkrecht zu einer Radialebene oder in der Festziehumfangsrichtung in Richtung des hinteren Endes ansteigt, d.h. in die Festziehumfangsrichtung geneigt ist.

Besonders bevorzugt ist es, wenn nicht nur ein einziger Umformabschnitt mit einer einzigen, diesem zugeordneten axialen Vertiefung zur Aufnahme von verdrängtem Material vorgesehen ist, sondern wenn mehrere, insbesondere gleichmäßig, in Umfangsrichtung beabstandete Umformabschnitte mit jeweils in der Festziehumfangsrichtung davor angeordneten Vertiefung vorgesehen sind, um hierdurch den Widerstand gegen Lösen des Außengewindeelementes weiter zu erhöhen. Dabei ist es besonders bevorzugt, wenn jeweils in Umfangsrichtung zwischen zwei Vertiefungen ein Umformabschnitt vorgesehen ist, der noch weiter bevorzugt an seinem axial vorderen Ende eine Kante aufweist, die sich bevorzugt in radialer Richtung erstreckt, und auf die zu die jeweils die Vertiefungen begrenzenden Wandabschnitte zulaufen.

Besonders bevorzugt ist eine Ausführungsform des Außengewindeelementes, bei der eine der mehreren Vertiefungen in der Festziehumfangsrichtung begrenzende Wand in der Festziehumfangsrichtung bis zu einer axial vorderen Umfangskante eines in der Festziehumfangsrichtung benachbarten Umformabschnittes verläuft, d.h. vorgenannte Kante mitbildet, insbesondere indem die Wand in der Festziehumfangsrichtung hin zum vorderen axialen Ende ansteigt. Bevorzugt ist ein Kantenwinkel, d.h. ein Winkel zwischen zwei die Umformkante begrenzenden Flanken kleiner als 90°, noch weiter bevorzugt kleiner als 80°, ganz besonders bevorzugt beträgt dieser Winkel zwischen etwa 40° und 79°. Bei dieser Ausführungsform wird dann mindestens ein Umformabschnitt, vorzugsweise werden sämtliche Umformabschnitte von zwei, bevorzugt winklig, zueinander verlaufenden Wänden begrenzt, nämlich einer ersten Wand, die eine in der Festziehumfangsrichtung vor dem Umformabschnitt vorgesehene Vertiefung begrenzt und eine zweite Wand, die eine entgegen der Festziehumfangsrichtung benachbarte Vertiefung begrenzt, wobei diese Vertiefung nicht dem vorgenannten Umformabschnitt, sondern einem entgegen der Festziehumfangsrichtung benachbarten Umformabschnitt zugeordnet ist, derart, dass dieser Aufnahmeelementmaterial in diese einformen kann. Die beiden vorgenannten Wände, nämlich die erste und die zweite Wand schließen bevorzugt einen Winkel von weniger als 90° ein und laufen auf eine gemeinsame Umformkante des Umformabschnittes zu. Es ist jedoch auch denkbar, dass die beiden Wände mit (geringem) Abstand zueinander enden, so dass zwischen den Umfangswänden ein Bereich begrenzt ist, mit dem sich das Außengewindeelement am Innengewindeöffnungsgrund abstützt. Es ist jedoch darauf zu achten, die Flächenerstreckung dieses Bereichs klein zu halten, um eine Bewegung des Außengewindeelementes in das Aufnahmeelementmaterial hinein zu gewährleisten.

Besonders zweckmäßig ist es, wenn der mindestens eine Umformabschnitt, insbesondere wenn sämtliche Umformabschnitte, noch weiter bevorzugt ausschließlich die Umformabschnitte (nachträglich) gehärtet sind, um hierdurch optimal weiteres Material eines mit dem Außengewindeelement zu verbindenden Aufnahmeelementes, insbesondere eines Motorblocks, in die zugeordnete Vertiefung hinein deformieren zu können. Besonders zweckmäßig ist es dabei, wenn das Außengewindeelement, zumindest die bevorzugt einteilig mit dem Außengewindeelement ausgebildeten Umformabschnitte aus einem härteren Material ausgebildet sind als das umzuformende Material des Aufnahmeelementes.

Wie bereits angedeutet ist es bevorzugt, das Außengewindeelement als Kaltfließpressteil auszubilden.

Die Erfindung führt zu dem auf einen Verbrennungsmotor, insbesondere für ein Kraftfahrzeug, mit einem, insbesondere aus einer Aluminiumlegierung oder aus Grauguss ausgebildeten Motorblock und mindestens einen in dem Motorblock aufgenommenen Außengewindeelement, welches nach dem Konzept der Erfindung ausgebildet ist, wobei das Außengewinde des Außengewindeelementes mit einem Innengewinde einer Innengewindeöffnung des Motorblocks verschraubt ist und in die mindestes eine Vertiefung des Außengewindeelementes Motorblockmaterial mittels des zugehörigen Umformabschnittes hineinverformt ist, welches materialschlüssig mit dem nicht verformten Motorblockmaterial verbunden ist, und wobei das Außengewindeelement eine Öffnung in einem Zylinderkopf axial durchsetzt sowie eine mit dieser Öffnung fluchtende Öffnung in einem Krümmerblech, welches mittels eines mit dem Außengewinde des Außengewindeelementes verschraubten Innengewindeelementes, insbesondere einer Innengewindemutter, am Zylinderkopf fixiert ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig.1: eine Seitenansicht eines als Kaltfließpressteil ausgebildeten Außengewindeelementes für eine Formschlussverbindung
- Fig. 2: eine klapprichtige Darstellung des Außengewindeelementes gemäß Fig. 1,
- Fig. 3: eine perspektivische Darstellung des Außengewindeelementes gemäß den Fig. 1 und 2,
- Fig. 4: eine Formschlussverbindung mit einem Außengewindeelement gemäß den Fig. 1 bis 3, wobei die Formschlussverbindung als Verbrennungsmotor ausgebildet ist, und
- Fig. 5: eine Detaildarstellung einer Formschlussverbindung, bei der Aufnahmeelementmaterial in eine Vertiefung des Außengewindeelements hineinverdrängt ist, und
- Fig. 6: eine Detaildarstellung einer alternativen Formschlussverbindung.

In den Figuren sind gleiche Elemente und Elemente mit der gleichen Funktion mit den gleichen Bezugszeichen gekennzeichnet.

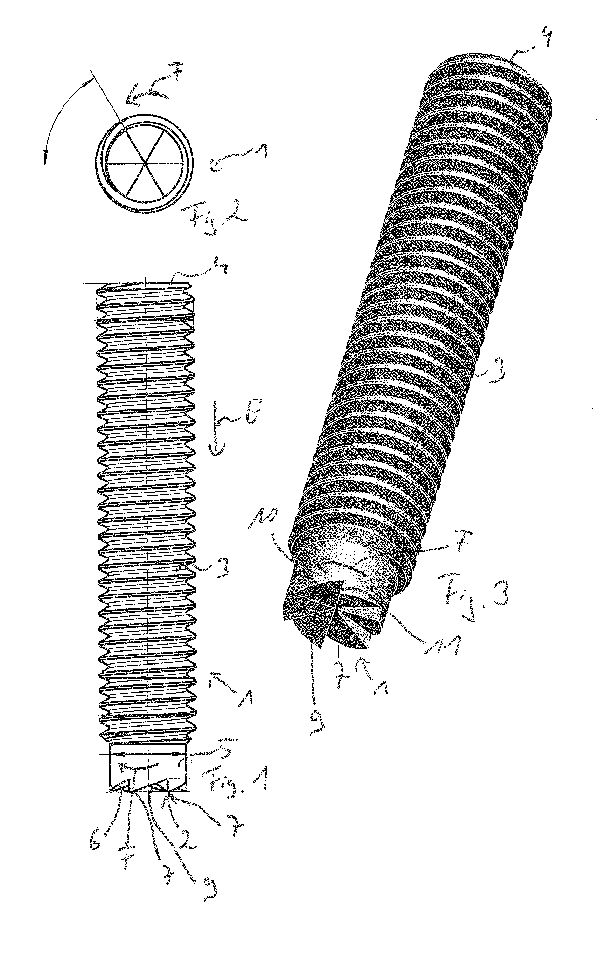

In den Fig. 1 bis 3 ist ein als Kaltfließpressteil ausgebildetes Außengewindeelement 1 in der bevorzugten Ausführungsform als kopfloser Außengewindestift dargestellt.

Das Außengewindeelement 1 umfasst ein vorderes Ende 2, was in Fig. 1 unten dargestellt ist und in Richtung einer axialen Einbringungsrichtung E vorne liegt. Von diesem vorderen Ende 2 über ein Außengewinde 3 beabstandet befindet sich ein axial hinteres Ende 4, in welchem ein nicht dargestellter Antrieb, beispielsweise ein Sechskantantrieb oder ein Torxantrieb oder dgl. eingeformt ist.

Das Außengewinde 3 bildet den größten Außendurchmesser des Außengewindeelementes 1 und erstreckt sich über den größten Teil seiner Axialerstreckung. An einen das Außengewinde 1 aufweisenden Abschnitt schließt ein außengewindefreier Zylinderabschnitt 5 an, der stirnseitig mit Verankerungsmitteln 6 versehen ist. Das Außengewinde 3 erstreckt sich in dem gezeigten (bevorzugten) Ausführungsbeispiel nicht unmittelbar bis zum vorderen Ende 2, da sich üblicherweise ein Innengewinde einer Innengewindeöffnung eines mit dem Außengewindeelements verwendenden Aufnahmeelementes nicht bis zum axialen Ende der Öffnung, erstreckt, da entsprechende Gewindeschneidwerkzeuge üblicherweise nur ein Gewinde bis zu einem Axialabstand zum Bohrungsende einbringen können. Der Zylinderabschnitt 5 überwindet diesen Axialabstand und ermöglicht, dass die Verankerungsmittel unmittelbar in Wechselwirkung treten können mit dem Aufnahmeelementmaterial.

Wie sich aus den Fig.1 bis 3 ergibt, umfassen die Verankerungsmittel zur Herstellung einer formschlüssigen Verankerung im Aufnahmeelement mehrere gleichmäßig in Umfangsrichtung beabstandete Umformabschnitte 7, jeweils umfassend eine axial vordere und sich in radialer Richtung erstreckende Umformkante, wobei die an die jeweilige Umformkante 8 angrenzenden Flanken in dem gezeigten Ausführungsbeispiel einen Winkel von etwa 70° einschließen.

In einer Festziehumfangsrichtung F benachbart zu jedem Umformabschnitt 7 befindet sich eine axiale Vertiefung 9, in die mittels des zugehörigen Umformabschnittes 7 Aufnahmeelementmaterial hineinverdrängbar ist, um somit ein Lösen des Außengewindeelementes 1 entgegen der Festziehumfangsrichtung F zu erschweren.

In dem gezeigten Ausführungsbeispiel wird jede Vertiefung 9 begrenzt von einer der dem Umformabschnitt in der Festziehumfangsrichtung gegenüberliegenden Wand 10, die entgegen der Festziehrichtung F in Richtung des hinteren Endes 4 ansteigt und zwar mit einer Steigung die größer ist als die Gewindesteigung des Außengewindes 3. Ferner wird die Vertiefung 9 auf der entgegen der Festziehumfangsrichtung F gelegenen Umfangsseite begrenzt von einer Wand 11, die in dem gezeigten Ausführungsbeispiel parallel zu Axialerstreckung des Außengewindeelementes 1 verläuft.

Bei dem gezeigten Ausführungsbeispiel ist die Geometrie so gelöst, dass jede Vertiefung 9 in Umfangsrichtung zwischen zwei Umformabschnitten 7 gelegen ist, wobei die Wand 11 eines ersten der Umformabschnitte 7 die zugehörige, in der Festziehumfangsrichtung benachbarte Vertiefung 9 auf der entgegen der Festziehumfangsrichtung gelegenen Umfangsseite begrenzt und die diese Vertiefung 9 auf der in der Festziehumfangsrichtungsseite begrenzende Wand 10 bereits eine Wand des benachbarten Umformabschnittes 7 ist.

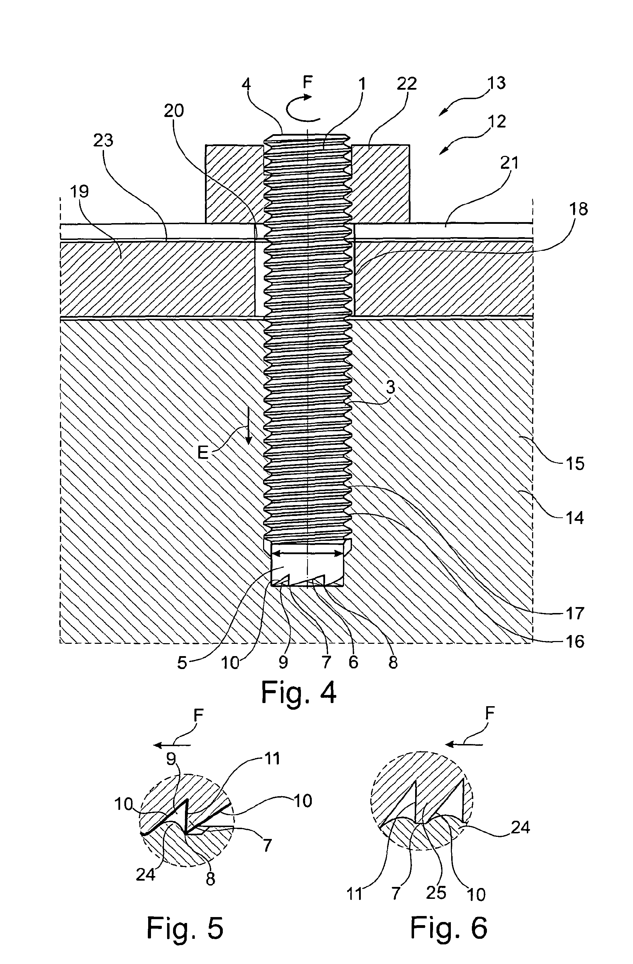

In Fig. 4 ist eine Formschlussverbindung 12, im konkreten Ausführungsbeispiel ein Verbrennungsmotor 13 dargestellt. Zu erkennen ist ein aus einer Aluminiumlegierung ausgebildetes Aufnahmeelement 14, welches in dem konkretren Ausführungsbeispiel von einem Motorblock 15 gebildet ist. In diesem befindet sich eine als Innengewindebohrung ausgeführte Innengewindeöffnung 16 mit Innengewinde 17, in das ein Außengewindeelement 1 mit seinem Außengewinde 3 verschraubt ist. Zu erkennen ist, dass das Innengewinde 17 nicht bis zum axialen (tiefen) Ende der Innengewindeöffnung 16 reicht, sondern mit Axialabstand zu diesem endet. Dieser Abstand wird überbrückt von dem Zylinderabschnitt 5 des Außengewindeelementes 1, welches mit seinen stirnseitigen Verankerungsmitteln 6 formschlüssig in das Material des Aufnahmeelementes 14 (Motorblock 15) eingreift. Das Außengewindeelement 1 ragt aus dem Aufnahmeelement 14 hervor und durchsetzt eine Öffnung 18 in einem Zylinderkopf 19 sowie eine mit der

Öffnung 18 fluchtende Öffnung 20 in einen Krümmerblech 21 eines Abgaskrümmers. Das Krümmerblech 21 wird mit Hilfe eines Innengewindeelementes 22 in Richtung auf den Zylinderkopf 19 verspannt, wobei in dem gezeigten Ausführungsbeispiel zwischen Krümmerblech 21 und Zylinderkopf 19 eine Dichtung 23 aufgenommen ist, die ebenfalls axial durchsetzt wird von dem Außengewindeelement 1 mit dessen Außengewinde 3 das Innengewindeelement 22 verschraubt ist.

Beim Eindrehen des Außengewindeelementes 1 in die Innengewindeöffnung 16 resultiert aufgrund der Gewindesteigung des Außengewindes 3 ein Vorschub in der Einbringrichtung E. Durch Verdrehen in der Festziehumfangsrichtung F wird von den Umformabschnitten 7, genauer von vorderen Umformkanten 8 der Umformabschnitte 7 Aufnahmeelementmaterial, hier Motorblockmaterial in der Festziehumfangsrichtung F umgeformt in die jeweils in der Festziehumfangsrichtung F benachbarte Vertiefung 9, die in der Festziehumfangsrichtung F jeweils begrenzt wird von einer Wand 10, die entgegen der Festziehumfangsrichtung F hin zum hinteren Ende 4 ansteigt und zwar mit einer Steigung die größer ist als die Außengewindesteigung des Außengewindes 3.

In Fig. 5 ist ein Ausschnitt der hergestellten Formschlussverbindung schematisch und vergrößert dargestellt. Zu erkennen ist eine Vertiefung 9, die von zwei Wänden 10, 11 begrenzt wird, wobei die in der Festziehumfangsrichtung F gelegene Wand 10 entgegen der Festziehumfangsrichtung F in axialer Richtung hin zum hinteren Ende des Außengewindeelementes ansteigt. Zu erkennen ist, dass in die Vertiefung 9 Aufnahmeelementmaterial 24 mit Hilfe des zugehörigen Umformabschnittes 7 eingeformt ist und sich an der Wand 10 abstützt, so dass ein Formschluss in axialer Richtung hergestellt ist, der in Umfangsrichtung wirkt und ein Lösen des Außengewindeelementes 1 entgegen der Festziehumfangsrichtung erschwert. Zu erkennen ist ferner, dass jeder Umformabschnitt begrenzt ist von zwei Wänden 10, 11, die winklig zueinander angeordnet sind und die sich an der (spitzen) Umformkante 8 treffen.

In Fig. 6 zeigt ein Detail einer (etwas) anderen Formschlussverbindung. Der wesentliche Unterschied besteht darin, dass die jeweils einen Umformabschnitt 7 begrenzenden Wände nicht auf eine spitze Umformkante zu laufen, sondern mit Umfangsabstand an einer Abstützfläche 25 enden, deren Flächenerstreckung so gewählt sein muss, dass die Abstützkraft ein Vordringen des Umformabschnittes in axialer Richtung in das Aufnahmeelementmaterial 24 nicht verhindert.

### Bezugszeichenliste

- 1: Außengewindeelement
- 2: vorderes Ende
- 3: Außengewinde
- 4: hinteres Ende
- 5: Zylinderabschnitt
- 6: Verankerungsmittel
- 7: Umformabschnitt
- 8: Umformkante
- 9: Vertiefung
- 10: eine die Vertiefung in der Festziehumfangsrichtung begrenzende Wand
- 11: eine die Vertiefung entgegen der Festziehumfangsrichtung begrenzende Wand
- 12: Formschlussverbindung
- 13: Verbrennungsmotor
- 14: Aufnahmeelement
- 15: Motorblock
- 16: Innengewindeöffnung
- 17: Innengewinde
- 18: Öffnung im Zylinderkopf
- 19: Zylinderkopf
- 20: Öffnung im Krümmerblech
- 21: Krümmerblech
- 22: Innengewindeelement, insbesondere Mutter
- 23: Dichtung
- 24: Aufnahmeelementmaterial
- 25: Abstützfläche

- E: axiale Einbringrichtung
- F: Festziehumfangsrichtung

## Patentansprüche

1. Formschlussverbindung, umfassend ein Außengewindeelement (1) und ein Aufnahmeelement (14), insbesondere einen Motorblock (15), oder ein Getriebegehäuse, wobei das Außengewindeelement, insbesondere ein Außengewindestift, zur Verankerung in einem Aufnahmeelement (14) ein mantelseitiges Außengewinde (3), ein axial vorderes, in eine Einbringungsrichtung (E) orientiertes Ende sowie ein davon abgewandtes axial hinteres Ende (4) aufweist, wobei
im Bereich des vorderen Endes (2) Verankerungsmittel (6) zur formschlüssigen Verankerung im Aufnahmeelement (14) vorgesehen sind, die mindestens einen sich in axialer Richtung erstreckenden Umformabschnitt (7) sowie in einer Festziehumfangsrichtung (F) vor dem Umformabschnitt (7) angeordnete axiale Vertiefung (9) zur Aufnahme von mittels des Umformabschnitts (7) umgeformten Aufnahmeelementmaterials (24) aufweisen, und wobei das Außengewinde (3) des Außengewindeelementes (1) mit einem Innengewinde (17) einer Innengewindeöffnung (16) des Aufnahmeelementes (1) verschraubt ist,
**dadurch gekennzeichnet, dass** zumindest ein entgegen der Festziehumfangsrichtung (F) in Richtung des hinteren Endes (4) des Außengewindeelementes (1) ansteigender Wandabschnitt einer die Vertiefung (9) auf der dem Umformabschnitt (7) in der Festziehumfangsrichtung (F) gegenüberliegenden Umfangsseite begrenzenden Wand eine Steigung aufweist, die größer ist als eine Gewindesteigung des Außengewindes (3), und dass in die mindestens eine Vertiefung (9) Aufnahmeelementmaterial (24) hinein verformt ist, welches materialschlüssig mit dem nicht verformten Aufnahmeelementmaterial (24) verbunden ist.

2. Formschlussverbindung nach Anspruch 1,
**dadurch gekennzeichnet,**
**dass** die Verankerungsmittel (6) stirnseitig am Außengewindeelement (1) angeordnet sind.

3. Formschlussverbindung nach einem der vorhergehenden Ansprüche,
**dadurch gekennzeichnet,**
**dass** zumindest ein Wandabschnitt einer die Vertiefung (9) auf der dem Umformabschnitt (7) in der Festziehumfangsrichtung (F) gegenüberliegenden Umfangsseite begrenzende Wand parallel zur Axialerstreckung des Außengewindeelementes (1) verläuft oder in der Festziehumfangsrichtung (F) ansteigt.

4. Formschlussverbindung nach einem der vorhergehenden Ansprüche,
**dadurch gekennzeichnet,**
**dass** ein an eine axial vordere Kante des Umformabschnitts (7) angrenzender, die Vertiefung (9) begrenzende Wandabschnitt des Umformabschnittes (7) parallel zur Axialerstreckung des Außengewindeelementes (1) verläuft oder in der Festziehumfangsrichtung (F) in Richtung des hinteren Endes (4) ansteigt.

5. Formschlussverbindung nach einem der vorhergehenden Ansprüche,
**dadurch gekennzeichnet,**
**dass** mehrere, insbesondere gleichmäßig, in Umfangsrichtung beabstandete Umformabschnitte (7) mit jeweils zugeordneter Vertiefung (9) vorgesehen sind.

6. Formschlussverbindung nach Anspruch 5,
**dadurch gekennzeichnet,**
**dass** eine eine der Vertiefungen (9) in der Festziehumfangsrichtung (F) begrenzende Wand in der Festziehumfangsrichtung (F) bis zu einer vorderen Umformkante (8) eines in der Festziehumfangsrichtung (F) benachbarten Umformabschnitts (7) verläuft, insbesondere in der Festziehumfangsrichtung (F) hin zum vorderen axialen Ende (2) ansteigt.

7. Formschlussverbindung nach einem der vorhergehenden Ansprüche,
**dadurch gekennzeichnet,**
**dass** zumindest der mindestens eine Umformabschnitt (7), insbesondere ausschließlich der zumindest eine Umformabschnitt (7) aus einem gehärteten Stahl besteht.

8. Formschlussverbindung nach einem der vorhergehenden Ansprüche,
**dadurch gekennzeichnet,**
**dass** das Außengewindeelement (1) als Kaltfließpressteil ausgebildet ist.

9. Formschlussverbindung nach einem der vorhergehenden Ansprüche,
**dadurch gekennzeichnet,**
**dass** das Außengewindeelement einen Antrieb zum Einbringen eines Drehmoments in der Festziehumfangsrichtung (F) aufweist.

10. Formschlussverbindung nach einem der vorhergehenden Ansprüche,
**dadurch gekennzeichnet,**
**dass** der zumindest eine Umformabschnitt (7), insbesondere das gesamte Außengewindeelement (1), aus einem härteren Material ausgebildet ist als das in die mindestens eine Aufnahme hinein verformte Aufnahmeelementmaterial (24).

11. Verbrennungsmotor (13), insbesondere für ein Kraftfahrzeug, mit einem ein Aufnahmeelement (14) bildenden Motorblock (15), insbesondere aus einer Aluminiumlegierung oder aus Grauguss, und einem in dem Motorblock (15) aufgenommenen Außengewindeelement (1) wobei das Außengewindeelement, insbesondere ein Außengewindestift, zur Verankerung in einem Aufnahmeelement (14) ein mantelseitiges Außengewinde (3), ein axial vorderes, in eine Einbringungsrichtung (E) orientiertes Ende sowie ein davon abgewandtes axial hinteres Ende (4) aufweist, wobei im Bereich des vorderen Endes (2) Verankerungsmittel (6) zur formschlüssigen Verankerung im Aufnahmeelement (14) vorgesehen sind, die mindestens einen sich in axialer Richtung erstreckende Umformabschnitt (7) sowie in einer Festziehumfangsrichtung (F) vor dem Umformabschnitt (7) angeordnete axiale Vertiefung (9) zur Aufnahme von mittels des Umformabschnitts (7) umgeformten Aufnahmeelementmaterials (24) aufweisen, und wobei zumindest ein entgegen der Festziehumfangsrichtung (F) in Richtung des hinteren Endes (4) des Außengewindeelementes (1) ansteigender Wandabschnitt einer die Vertiefung (9) auf der dem Umformabschnitt (7) in der Festziehumfangsrichtung (F) gegenüberliegenden Umfangsseite begrenzenden Wand eine Steigung aufweist, die größer ist als eine Gewindesteigung des Außengewindes (3), und wobei das Außengewinde (3) des Außengewindeelementes (1) mit einem Innengewinde (17) einer Innengewindeöffnung (16) des Motorblocks (15) verschraubt ist und in die mindestens eine Vertiefung (9) Motorblockmaterial hinein verformt ist, welches materialschlüssig mit dem nicht verformten Motorblockmaterial verbunden ist, und wobei das Außengewindeelement (1) eine Öffnung (18) in einem Zylinderkopf (19) sowie eine mit dieser Öffnung (18) fluchtende Öffnung (20) in einem Krümmerblech (21) durchsetzt, welches mittels eines mit dem Außengewinde (3) des Außengewindeelementes (1) verschraubten Innengewindeelementes (22) am Zylinderkopf (19) fixiert ist.

## Claims

1. A form-fitting connection, comprising an external thread element (1) and a receiving element (14), in particular an engine block (15), or a gear housing, wherein the external thread element, in particular an external thread pin, for anchoring in a receiving element (14) has an external thread (3) on the lateral surface, an axially front end oriented in an introduction direction (E) and an axially rear end (4) facing away therefrom, wherein
in the region of the front end (2) anchoring means (6) are provided for form-fitting anchoring in the receiving element (14), which anchoring means have at least one deformation section (7) extending in axial direction and an axial depression (9) arranged in front of the deformation section (7) in a tightening circumferential direction (F) for receiving receiving element material (24) deformed by means of the deformation section (7), and wherein the external thread (3) of the external thread element (1) is screwed with an internal thread (17) of an internal thread opening (16) of the receiving element (14),
**characterized in that** at least one wall section, rising contrary to the tightening circumferential direction (F) in the direction of the rear end (4) of the external thread element (1), of a wall delimiting the depression (9) on the circumferential side lying opposite the deformation section (7) in the tightening circumferential direction (F) has a pitch which is greater than a thread pitch of the external thread (3), and that receiving material (24) is deformed into the at least one depression (9), which material is connected in a materially bonded manner with the non-deformed receiving element material (24).

2. The form-fitting connection according to Claim 1,
**characterized in that**
the anchoring means (6) are arranged on the face side on the external thread element (1).

3. The form-fitting connection according to one of the preceding claims,
**characterized in that**
at least one wall section of a wall delimiting the depression (9) on the circumferential side lying opposite the deformation section (7) in the tightening circumferential direction (F) runs parallel to the axial extent of the external thread element (1) or rises in the tightening circumferential direction (F).

4. The form-fitting connection according to one of the preceding claims,
**characterized in that**
a wall section of the deformation section (7) adjoining an axially front edge of the deformation section (7) and delimiting the depression (9) runs parallel to the axial extent of the external thread element (1) or rises in the tightening circumferential direction (F) in the direction of the rear end (4).

5. The form-fitting connection according to one of the preceding claims,
**characterized in that**
a plurality of deformation sections (7), spaced apart, in particular uniformly, in circumferential direction are provided with a respectively associated depression (9).

6. The form-fitting connection according to Claim 5,
**characterized in that**
a wall delimiting one of the depressions (9) in the tightening circumferential direction (F) runs in the tightening circumferential direction (F) up to a front deformation edge (8) of a deformation section (7) adjacent in the tightening circumferential direction (F), in particular rises in the tightening circumferential direction (F) to the front axial end (2).

7. The form-fitting connection according to one of the preceding claims,
**characterized in that**
at least the at least one deformation section (7), in particular exclusively the at least one deformation section (7) consists of a hardened steel.

8. The form-fitting connection according to one of the preceding claims,
**characterized in that**
the external thread element (1) is constructed as a cold extruded part.

9. The form-fitting connection according to one of the preceding claims,
**characterized in that**
the external thread element has a drive for introducing a torque in the tightening circumferential direction (F).

10. The form-fitting connection according to one of the preceding claims,
**characterized in that**
the at least one deformation section (7), in particular the entire external thread element (1), is constructed from a harder material than the receiving element (24) which is deformed into the at least one mount.

11. An internal combustion engine (13), in particular for a motor vehicle, with an engine block (15) forming a receiving element (14), in particular made from an aluminium alloy or from grey cast iron, and with an external thread element (1) received in the engine block (15), wherein the external thread element, in particular an external thread pin, for anchoring in a receiving element (14) has an external thread (3) on the lateral surface, an axially front end oriented in an introduction direction (E) and an axially rear end (4) facing away therefrom, wherein in the region of the front end (2) anchoring means (6) are provided for form-fitting anchoring in the receiving element (14), which have at least one deformation section (7) extending in axial direction and an axial depression (9) arranged in front of the deformation section (7) in a tightening circumferential direction (F) for receiving receiving element material (24) deformed by means of the deformation section (7), and wherein at least one wall section, rising contrary to the tightening circumferential direction (F) in the direction of the rear end (4) of the external thread element (1), of a wall delimiting the depression (9) on the circumferential side lying opposite the deformation section (7) in the tightening circumferential direction (F) has a pitch which is greater than a thread pitch of the external thread (3), and wherein the external thread (3) of the external thread element (1) is screwed with an internal thread (17) of an internal thread opening (16) of the engine block (15), and into the at least one depression (9) engine block material is deformed, which is connected in a materially bonded manner with the non-deformed engine block material, and wherein the external thread element (1) penetrates an opening (18) in a cylinder head (19) and an opening (20), aligned with this opening (18), in a manifold plate (21), which is fixed to the cylinder head (19) by means of an internal thread element (22) screwed with the external thread (3) of the external thread element (1).

## Revendications

1. Liaison par conjugaison de forme, comprenant un élément (1) à filet extérieur et un élément de réception (14), en particulier un bloc moteur (15) ou un carter de transmission, l'élément à filet extérieur, en particulier une tige à filet extérieur, présentant, pour son ancrage dans un élément de réception (14) un filet extérieur d'enveloppe (3), une extrémité avant orientée dans une direction d'insertion (E) ainsi qu'une extrémité axiale arrière (4) opposée à la première, des moyens d'ancrage (6) permettant un ancrage par conjugaison de forme dans l'élément de réception (14) étant prévus au niveau de l'extrémité avant (2) et présentant au moins une partie déformante (7) qui s'étend dans la direction axiale ainsi qu'un creux axial (9) disposé en avant de la partie déformante (7) dans une direction périphérique de serrage (F), pour reprendre du matériau (24) d'élément de reprise déformé au moyen de la partie déformante (7), le filet extérieur (3) de l'élément (1) à filet extérieur étant vissé sur un filet intérieur (17) d'une ouverture (16) à filet intérieur de l'élément de réception (14), **caractérisée en ce que** au moins une partie de paroi remontant en opposition à la direction périphérique de serrage (F) en direction de l'extrémité arrière (4) de l'élément (1) à filet extérieur, d'une paroi qui délimite le creux (9) sur le côté périphérique opposé à la partie déformante (7) dans la direction périphérique de serrage (F) présente une pente supérieure à la pente du filet extérieur (3) et **en ce que** le matériau (24) de l'élément de réception qui est relié en correspondance de matière au matériau (24) non déformé de l'élément de réception est déformé dans le ou les creux (9).

2. Liaison par conjugaison de forme selon la revendication 1, **caractérisée en ce que** les moyens d'ancrage (6) sont disposés frontalement sur l'élément (1) à filet extérieur.

3. Liaison par conjugaison de forme selon l'une des revendications précédentes, **caractérisée en ce qu'**au moins une partie de paroi d'une partie qui délimite le creux (9) sur le côté périphérique opposée à la partie déformante (7) dans la direction périphérique de serrage (F) s'étend parallèlement à l'extension axiale de l'élément (1) à filet extérieur ou remonte dans la direction périphérique de serrage (F).

4. Liaison par conjugaison de forme selon l'une des revendications précédentes, **caractérisée en ce qu'**une partie de paroi de la partie déformante (7), adjacente au bord de la partie déformante (7) située axialement en avant et délimitant le creux (9), s'étend parallèlement à l'extension axiale de l'élément (1) à filet extérieur ou remonte dans la direction périphérique de serrage (F) en direction de l'extrémité arrière (4).

5. Liaison par conjugaison de forme selon l'une des revendications précédentes, **caractérisée en ce qu'**elle présente plusieurs parties déformantes (7) maintenues à distance mutuelle en particulier uniforme dans la direction périphérique et à chacune desquelles est associé un creux (9).

6. Liaison par conjugaison de forme selon la revendication 5, **caractérisée en ce qu'**une paroi qui délimite l'un des creux (9) dans la direction périphérique de serrage (F) s'étend dans la direction périphérique de serrage (F) jusqu'à un bord de déformation avant (8) d'une partie déformante (7) voisine dans la direction périphérique de serrage (F), et en particulier remonte dans la direction périphérique de serrage (2) située axialement en avant.

7. Liaison par conjugaison de forme selon l'une des revendications précédentes, **caractérisée en ce qu'**au moins la ou les parties déformantes (7) et en particulier exclusivement la ou les parties déformantes (7) sont constituées d'acier durci.

8. Liaison par conjugaison de forme selon l'une des revendications précédentes, **caractérisée en ce que** l'élément (1) à filet extérieur est configuré comme pièce extrudée à froid.

9. Liaison par conjugaison de forme selon l'une des revendications précédentes, **caractérisée en ce que** l'élément à filet extérieur présente un entraînement qui applique un couple de rotation dans la direction périphérique de serrage (F).

10. Liaison par conjugaison de forme selon l'une des revendications précédentes, **caractérisée en ce que** la ou les parties déformantes (7) et en particulier la totalité de l'élément (1) à filet extérieur sont formés de matériau plus dur que le matériau (24) d'élément de reprise déformé dans le ou les logements.

11. Moteur (13) à combustion interne, en particulier pour véhicule automobile, et présentant un bloc moteur (15) formant un élément de réception (14), en particulier en un alliage d'aluminium ou en fonte grise, et un élément (1) à filet extérieur repris dans le bloc moteur (15), l'élément à filet extérieur, en particulier une tige à filet extérieur, présentant pour son ancrage dans un élément de réception (14) un filet extérieur d'enveloppe (3), une extrémité avant orientée dans la direction d'insertion (E) ainsi qu'une extrémité axiale arrière (4) opposée à la première, des moyens d'ancrage (6) permettant un ancrage par conjugaison de forme dans l'élément de réception (14) étant prévus au niveau de l'extrémité avant (2) et présentant au moins une partie déformante (7) qui s'étend dans la direction axiale ainsi qu'un creux axial (9) disposé en avant de la partie déformante (7) dans une direction périphérique de serrage (F), pour reprendre du matériau (24) d'élément de reprise déformé au moyen de la partie déformante (7), au moins une partie de paroi remontant en opposition à la direction périphérique de serrage (F) en direction de l'extrémité arrière (4) de l'élément (1) à filet extérieur, d'une paroi qui délimite le creux (9) sur le côté périphérique opposé à la partie déformante (7) dans la direction périphérique de serrage (F) présente une pente supérieure à la pente du filet extérieur (3), le filet extérieur (3) de l'élément (1) à filet extérieur étant vissé sur le filet intérieur (17) d'une ouverture (16) à filet intérieur du bloc moteur (15) et le matériau du bloc moteur étant déformé dans le ou les creux (9) et étant raccordé en correspondance de matière avec le matériau non déformé du bloc moteur, l'élément (1) à filet extérieur traversant une ouverture (18) ménagée dans une tête (19) de cylindre ainsi qu'une ouverture (20), alignée sur cette ouverture (18), ménagée dans une tôle de courbure (21) qui est fixée sur la tête (19) du cylindre au moyen d'un élément (22) à filet intérieur vissé sur le filet extérieur (3) de l'élément (1) à filet extérieur.
